# FASCICULE DE BREVET EUROPEEN

(11) **EP 4 124 535 B1**
(45) Date de publication et mention de la délivrance du brevet: **10.07.2024**
(21) Numéro de dépôt: 22186704.7
(22) Date de dépôt: 25.07.2022
(51) Int. Cl.: B61D 1/04

(54) **PROCÉDÉ DE TRANSPORT DE PASSAGERS ET DE FRET, ET RÉSEAU DE TRANSPORT ASSOCIÉ**
VERFAHREN ZUR BEFÖRDERUNG VON PASSAGIEREN UND FRACHT UND ENTSPRECHENDES TRANSPORTNETZ
METHOD FOR TRANSPORTING PASSENGERS AND CARGO AND ASSOCIATED TRANSPORT NETWORK

(30) Priorité: 26.07.2021 FR 2108077
(43) Date de publication de la demande: 01.02.2023
(73) Titulaire: ALSTOM Holdings, 93400 Saint-Ouen-sur-Seine (FR)
(72) Inventeur: TOURNIER, Thierry, 70400 Châlonvillars (FR); MONTEYNE, Loic, 65000 Tarbes (FR); HEUZE, Alexandre, 93400 Saint Ouen (FR); BARREZUETA, Maria Patricia, 69008 Lyon (FR); MANTION, Julie, 70400 Chatebier (FR)
(74) Mandataire: Lavoix

(56) Documents cités:
- WO-A1-2019/095700
- CN-U- 213 168 055
- DE-A1- 19 742 279

## Description

La présente invention concerne un procédé de transport de passagers et de fret.

Elle concerne également un véhicule ferroviaire configuré pour mettre en oeuvre ce procédé de transport.

La présente invention se rapporte plus particulièrement au transport de fret et de passagers par un véhicule ferroviaire, tel qu'un véhicule à grande vitesse (par exemple supérieure à 200 km/h) ou un véhicule ferroviaire urbain tel qu'un tramway ou un train régional.

Il existe des véhicules ferroviaires exclusivement dédiés au transport de fret. Les voitures comportent une ou plusieurs zones de transport dédiées à la réception du fret. Ces véhicules circulent d'un premier dépôt, dans lequel le fret est chargé sur le véhicule ferroviaire, à un deuxième dépôt, dans lequel le fret est déchargé du véhicule ferroviaire. Après le déchargement dans le deuxième dépôt, de nouveau fret est chargé au véhicule ferroviaire, ou le véhicule ferroviaire circule, vide, à un autre dépôt afin d'être chargé de fret.

Il existe en outre des véhicules ferroviaires ayant des zones configurées pour recevoir exclusivement des passagers et des zones configurées pour recevoir exclusivement du fret, ces zones étant agencées dans des voitures distinctes.

Cependant, le transport de fret par de tels véhicules ferroviaires est fastidieux et peu efficace. En effet, le véhicule ferroviaire doit effectuer des déplacements sans charge afin d'arriver à un dépôt dans lequel le fret est chargé sur le véhicule ferroviaire. Cela augmente par exemple l'énergie globalement consommée par le véhicule ferroviaire pour le transport du fret. Aussi, les frais d'exploitation du véhicule ferroviaire par kilomètre de transport effectif du fret augmentent à cause des déplacements sans charge du véhicule ferroviaire.

Cela est également le cas pour des véhicules ayant une zone de transport dédiée exclusivement aux passagers et une zone de transport exclusivement dédiée au fret, puisque les zones respectives restent dépourvues de passagers ou de fret pendant certains déplacements du véhicule ferroviaire.

WO2019/095700 A1 divulgue un véhicule ferroviaire présentant deux configurations. Une première configuration est une configuration de transport de fret, dans laquelle une voiture comprend une zone de transport dédiée exclusivement au fret et une deuxième configuration de transport de passagers. Dans la deuxième configuration, le véhicule ferroviaire transporte exclusivement des passagers disposés à l'intérieur de la zone de transport. Cependant, dans ce cas, l'ensemble des sièges dans la zone de transport est déplacé en même temps, ce qui limite l'adaptabilité du véhicule ferroviaire et son efficacité.

Un but de l'invention est donc d'obtenir un procédé de transport qui minimise les déplacements du véhicule ferroviaire sans charge, et présente ainsi une efficacité plus élevée.

A cet effet, l'invention concerne un procédé de transport de passagers et de fret selon la revendication 1.

Un tel procédé permet de minimiser les déplacements du véhicule ferroviaire à vide, parce que le véhicule transporte soit du fret, soit des passagers, dans la même zone de transport, en fonction d'un besoin de transport de fret ou de passagers.

Selon des modes particuliers de réalisation, le procédé de transport comprend l'une ou plusieurs des caractéristiques des revendications 2 à 7.

L'invention a également pour objet un réseau de transport comprenant au moins un véhicule ferroviaire, configuré pour mettre en oeuvre un procédé de transport tel que décrit ci-dessus.

L'invention sera mieux comprise à la lecture de la description qui va suivre, donnée uniquement à titre d'exemple et faite en se référant aux dessins annexés, sur lesquels :
[Fig 1] la figure 1 est une représentation schématique d'un réseau de transport selon l'invention, et
[Fig 2] la figure 2 est un organigramme d'un procédé de transport selon l'invention mis en oeuvre par le réseau de transport de la figure 1.

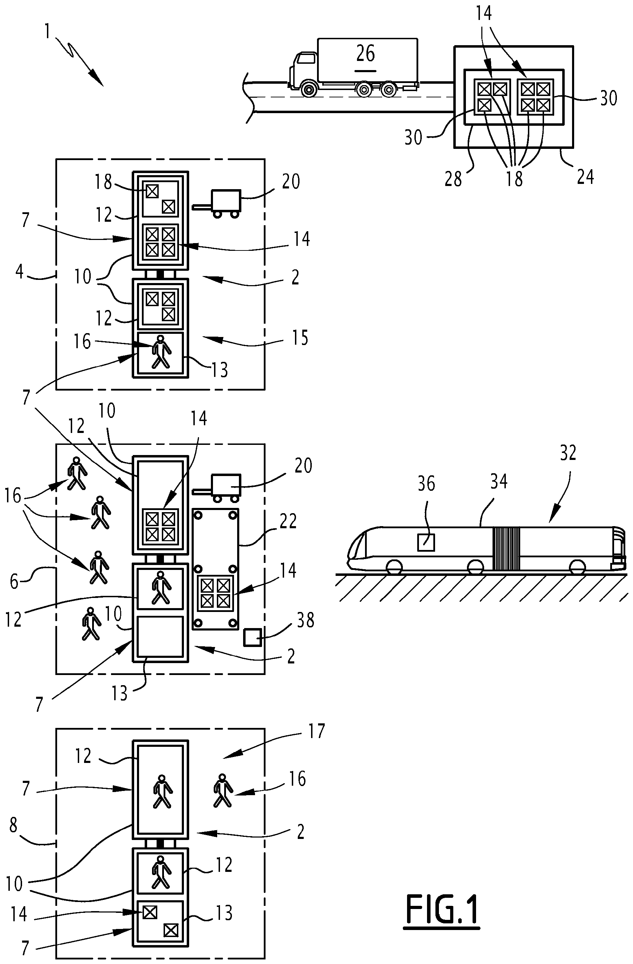

En référence à la figure 1, on décrit un réseau de transport 1 selon l'invention, comprenant au moins un véhicule ferroviaire 2, un premier point 4, un deuxième point 6, et un troisième point 8 distants les uns par rapport aux autres.

Chacun parmi le premier, deuxième et troisième point 2, 4, 6 est par exemple une gare, un entrepôt, une usine ou un atelier d'entretien du véhicule ferroviaire 2. Dans la suite de la description, à titre d'illustration seulement, les points 4, 6 et 8 sont désignés comme première, deuxième et troisième gares. L'homme du métier comprendra que, selon d'autres exemples, chacun de ces gares est un entrepôt, une usine ou un atelier d'entretien.

Sur l'exemple de la figure 1, le même véhicule ferroviaire 2 est représenté dans la première, la deuxième et la troisième gares 4, 6, 8, à des instants distincts.

Selon des modes de réalisation particuliers (non représentés), le réseau de transport 1 comprend plus que trois gares. Selon d'autres modes de réalisation particuliers (non représentés), le réseau de transport 1 comprend un seul véhicule ferroviaire 2, deux véhicules ferroviaires 2 ou plus que deux véhicules ferroviaires 2.

Le véhicule ferroviaire 2 est par exemple un train à grande vitesse (ou TGV), un train urbain ou un train régional, comprenant une pluralité de voitures 10 comprenant chacune une caisse 7 définissant un espace intérieur.

Chaque voiture 10 comprend une zone de transport 12 agencée dans l'espace intérieur.

En complément, chaque voiture 10 comprend une seconde zone de transport 13 distincte de la zone de transport 12, et agencé dans l'espace intérieur.

Par exemple, et comme particulièrement visible sur la figure 1, une première voiture 10 comprend la zone de transport 12, et une deuxième voiture 10 comprend à la fois la zone de transport 12 et la seconde zone de transport 13.

En variante, la deuxième voiture 10 comprend uniquement la seconde zone de transport 13.

La zone de transport 12 est dédiée, pendant une période donnée, soit à un fret 14, soit à des passagers 16.

Par « fret », on entend par exemple une cargaison ou des marchandises transportées dans le réseau de transport 1. Par exemple, le fret 14 comprend une pluralité de colis 18.

Le fret 14 est par exemple envoyé par un client ou commanditaire qui ne se déplace pas avec ce fret dans le réseau de transport 1. Par exemple, les bagages de passagers qui voyagent dans le véhicule ferroviaire 2 ne sont pas considérés comme appartenant au fret 14.

Par « zone de transport dédiée au fret », on entend que la zone de transport 12 convient au transport du fret 14. La zone de transport 12 dédiée au fret 14 ne reçoit pas des passagers 16, mais uniquement le fret 14. La zone de transport 12 est ainsi dépourvue de passagers 16. Elle est, lorsqu'elle est dédiée au fret, exclusivement dédiée au fret.

Par « zone de transport dédiée aux passagers », on entend que ladite zone de transport 12 convient au transport des passagers 16. Elle reçoit uniquement les passagers 16, mais ne reçoit pas de fret 14.

Des règles d'accès à la zone de transport 12 sont par exemple définies selon que la zone de transport 12 est dédiée aux passagers 16 ou au fret 14. Lorsque la zone de transport 12 est dédiée au fret 14, aucun passager 16 n'est autorisé à pénétrer dans la zone de transport 12, et aucun fret n'est autorisé dans la zone 12 dédiée aux passagers.

La zone de transport 12 est configurée pour respecter des contraintes de sécurité pour le transport de passagers 16 et des contraintes de sécurité pour le transport de fret 14.

De préférence, la zone de transport 12 comporte un plancher, non représenté, présentant une surface antidérapante adaptée à la fois pour le transport de passagers 16 et de fret 14.

La première, deuxième et troisième gares 4, 6, 8 sont des gares ferroviaires. Les gares 4, 6, 8 comprennent par exemple des robots autonomes 20 et des tapis roulants 22 pour le transport du fret 14 dans la gare respective 4, 6, 8. Dans l'exemple de la figure 1, la première et la deuxième gare 4, 6 comprennent chacune un robot autonome 20 et la deuxième gare 6 comprend un tapis roulant 22.

Le robot autonome 20 est configuré pour transporter le fret 14 jusqu'au véhicule ferroviaire 2 ou pour décharger le fret du véhicule ferroviaire 2. Le robot autonome 20 comprend par exemple un moteur électrique, des roues configurées pour être entraînées par le moteur électrique et un dispositif de manutention du fret, configuré pour soulever et transporter le fret (éléments non représentés). En outre, le robot autonome 20 comprend par exemple une unité de contrôle (non représentée) configurée pour contrôler le moteur et le dispositif de manutention.

Le tapis roulant 22 est configuré pour transporter le fret 14 à partir du véhicule ferroviaire 2 à l'intérieur de la deuxième gare 6. Le tapis roulant 22 est de préférence positionné à la hauteur du plancher de la zone de transport 12.

Le tapis roulant 22 comprend par exemple un système d'identification du fret 14, en particulier des colis 18. Par exemple, le système d'identification comporte un lecteur d'un code barre ou d'une puce RFID (de l'anglais « radio-frequency identification ») attachés sur chaque colis 18.

Le réseau de transport 1 comporte en outre un dépôt 24 distant des gares 4, 6, 8, ainsi que des véhicules routiers 26 configurés pour transporter le fret 14 du dépôt 24 à la première gare 4.

Le dépôt 24 comprend par exemple un système de préparation 28 du fret 14 configuré pour repartir les colis 18 du fret 14 dans une pluralité de caisses de transport 30 en fonction de la destination de chaque colis 18.

Chaque caisse de transport 30 est notamment configurée pour recevoir une pluralité de colis 18, comme représenté dans l'exemple de la figure 1.

Le réseau de transport 1 comprend en outre des moyens de transport urbains 32, tels que des tramways, des bus, ou des navettes autonomes. Selon l'exemple de la figure 1, le réseau de transport 1 comprend un tramway 34.

Le moyen de transport urbain 32 comprend une zone de transport urbain 36 dédiée au transport du fret 14. En particulier, aucun passager 16 du moyen de transport urbain 32 n'est autorisé à pénétrer dans la zone de transport urbain 36.

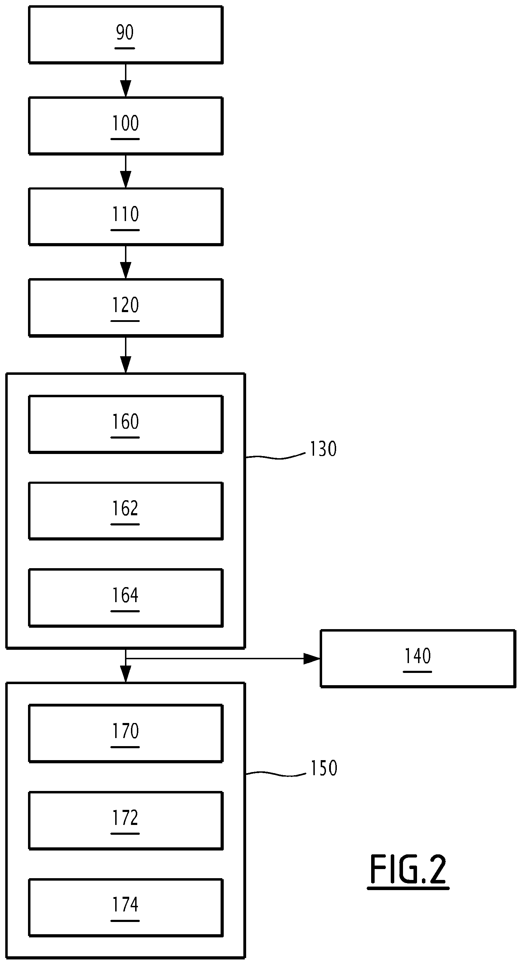

Un procédé de transport de passagers et de fret va maintenant être décrit, en référence à la figure 2.

Le procédé de transport est par exemple mis en oeuvre par le réseau de transport 1.

Le procédé de transport comprend une étape de préparation 90 du fret 14, une étape de transport routier 100, une étape de déchargement 110 du fret 14, une étape de transport intermédiaire 120, une étape de transport de fret 130, une étape de transport urbain 140 et une étape de transport de passagers 150. Les étapes 90, 100, 110, 120 et 140 sont des étapes optionnelles du procédé de transport.

Lors de l'étape de préparation 90 du fret, les colis 18 sont repartis dans la pluralité de caisses de transport 30 en fonction de la destination de chaque colis 18. Chaque caisse de transport 30 reçoit ainsi une pluralité de colis 18. L'étape de préparation 90 est de préférence mis en oeuvre par un robot de préparation (non représenté).

En variante, l'étape de préparation 90 est mise en oeuvre par un agent, éventuellement à l'aide d'un dispositif de transport, tel qu'un transpalette.

L'étape de préparation 90 est de préférence mise en oeuvre dans le dépôt 24 distant de la première, deuxième, et troisième gare 4, 6, 8.

Selon une variante non représentée, l'étape de préparation 90 est mise en oeuvre dans la première gare 4, avant l'étape de transport de fret 130.

Selon une autre variante non représentée, l'étape de préparation 90 est mise en oeuvre après l'étape de transport ferroviaire 130, dans la deuxième gare 6.

Lors de l'étape de transport routier 100, le fret 14 est chargé, de préférence au dépôt 24, dans le véhiculer routier 26 et transporté jusqu'à la première gare 4.

Lors de l'étape de déchargement 110, un agent ou le robot autonome 20 décharge le fret 14 du véhiculer routier 26.

Lors de l'étape de transport intermédiaire 120, l'agent ou le robot autonome 20 transporte le fret jusqu'au véhicule ferroviaire 2. Lorsque plusieurs véhicules ferroviaires 2 sont stationnés dans la première gare 4, le robot autonome 20 ou l'agent choisit le véhicule ferroviaire 2 en fonction de la destination du fret 14.

Notamment, lorsque l'étape de transport intermédiaire 120 est mise en oeuvre par le robot autonome 20, le robot autonome détecte la destination du fret 14 en lisant des informations sur le code barre ou sur la puce RFID attachée sur le colis 18 du fret, et identifie le véhicule ferroviaire 2 ayant comme destination une région correspondant à la destination du fret. Par exemple, si un premier véhicule ferroviaire a pour destination une région A et un deuxième véhicule ferroviaire a pour destination une région B distincte de la région A, le robot autonome 20 transporte le fret 14 ayant une destination dans la région A vers le premier véhicule ferroviaire.

Selon un mode de réalisation, le robot autonome 20 choisit l'emplacement du fret 14 à l'intérieur de la zone de transport 12 du véhicule ferroviaire 2 en fonction de la destination de fret 14.

Lors de l'étape de transport de fret 130, le véhicule ferroviaire 2 est dans une configuration de transport de fret 15, illustrée sur la figure 1 pour le véhicule dans la première gare 4. Par « configuration de transport de fret 15 », il est entendu que la zone de transport 12 est dédiée exclusivement au fret 14.

Lors de cette étape, le véhicule ferroviaire 2 transporte le fret dans la zone de transport 12, dédiée exclusivement à ce fret pendant l'étape de transport de fret 130, de la première gare 4 à la deuxième gare 6.

En complément, le véhicule ferroviaire 2 transporte, lors de l'étape de transport de fret 130, des passagers 16 dans la seconde zone de transport 13.

L'étape de transport de fret 130 comprend une sous-étape de chargement 160 du fret 14 dans la zone de transport 12 du véhicule ferroviaire 2, une sous-étape de déplacement 162 du véhicule ferroviaire 2 de la première gare 4 à la deuxième gare 6, et une sous-étape de déchargement 164 du fret 14 du véhicule ferroviaire 2.

Lors de la sous-étape de chargement 160, le fret 14 est chargé par le robot autonome 20 ou par un agent dans la zone de transport 12.

Lors de la sous-étape de déplacement 162, le véhicule ferroviaire 2 se déplace de la première gare 4 à la deuxième gare 6, de préférence à une vitesse maximale comprise entre 200 km/h et 350 km/h.

Lors de l'arrivée du véhicule ferroviaire 2 à la deuxième gare 6, le véhicule ferroviaire 2 transmet de préférence des données concernant le type de fret 14 et la destination finale du fret 14 à un système de gestion (non représenté) de la deuxième gare 6.

Lors de la sous-étape de déchargement 164, le fret 14 est déchargé du véhicule ferroviaire 2. Par exemple, le robot autonome 20 décharge l'ensemble du fret 14 du véhicule ferroviaire 2. Le robot autonome 20 prend notamment en compte des données transmises par le système de gestion concernant le type de fret 14 et sa destination lors du déchargement.

En variante ou en complément, le fret 14 se déplace sur le tapis roulant 22 à l'intérieur de la deuxième gare 6.

De préférence, la durée de la sous-étape de déchargement 164 du fret du véhicule ferroviaire 2 est inférieure ou égale à trois minutes. A la fin de la sous-étape de déchargement 164, la zone de transport 12 est dépourvue de fret 14.

Lors de l'étape de transport urbain 140, le fret 14 est transporté, à partir de la troisième gare 8, par le moyen de transport urbain 32, vers une destination finale du fret 14.

Par exemple, le robot autonome 20 transporte le fret 14 jusqu'au moyen de transport urbain 32, et place le fret 14 dans la zone de transport urbain 36. Le moyen de transport urbain 32 se déplace ensuite vers une destination finale du fret 14.

Selon une variante de l'étape de transport urbain 140, le robot autonome 20, transportant le fret 14, monte dans le moyen de transport urbain 32. Ensuite, le moyen de transport urbain 32 se déplace vers la destination finale, avec le robot autonome 20 chargé du fret. De préférence, à proximité de la destination finale, le robot autonome 20 descend du moyen de transport urbain 32 et se rend à la destination finale.

Selon une autre variante de l'étape de transport urbain 140, un agent charge le fret 14 dans la zone de transport urbain 36. Lors de l'arrivée du moyen de transport urbain 32 à proximité de la destination finale, par exemple un agent décharge le fret 14.

Selon une variante du procédé, après la sous-étape de déchargement 164, le robot autonome 20 transporte le fret 14 dans un système de stockage 38 de la deuxième gare 6.

Lors de l'étape de transport de passagers 150, le véhicule ferroviaire 2 est dans une configuration de transport de passagers 17, illustrée sur la figure 1 pour le véhicule 2 dans la troisième gare 8. Par « configuration de transport de passagers 17 », il est entendu que la zone de transport 12 est dédiée exclusivement aux passagers 16.

Lors de cette étape, le véhicule 2 transporte les passagers 16 disposés à l'intérieur de la zone de transport 12 de la deuxième gare 6 à la troisième gare 8.

En complément, le véhicule ferroviaire 2 transporte, lors de l'étape de transport de passagers 150, du fret 14 dans la seconde zone de transport 13.

L'étape de transport de passagers 150 comprend une sous-étape de prise en charge 170, une sous-étape de déplacement 172 et une sous-étape de sortie 174 des passagers.

Lors de la sous-étape de prise en charge 170, les passagers 16 montent dans la zone de transport 12 dépourvue de fret 14. La zone de transport 12 est dédiée aux passagers 16 lors de l'étape de transport de passagers 150. La zone de transport 12 est dédiée exclusivement aux passagers 16 lors de l'étape de transport des passagers 150.

Lors de la sous-étape de déplacement 172, le véhicule ferroviaire 2 se déplace de la deuxième gare 6 à la troisième gare 8, de préférence à une vitesse maximale comprise entre 200 km/h et 350 km/h.

Lors de la sous-étape de sortie 174, les passagers 16 descendent du véhicule ferroviaire 2 lorsque le véhicule ferroviaire 2 est arrivé à la troisième gare 8.

De préférence, la caisse 7 de chaque voiture 10 est, lors de l'étape de transport de passagers 150 identique par rapport à cette caisse 7 lors de l'étape de transport de fret 130. En particulier, seulement l'espace intérieur formé par la caisse 7 est modifiée entre la configuration de transport de fret 15 et la configuration de transport de passagers 17, afin que la zone de transport 12 soit adaptée pour le transport du fret 14 ou alternativement pour le transport des passagers 16.

De préférence, le procédé comprend une étape de reconfiguration au cours de laquelle l'espace intérieur formé par la caisse 7 est modifiée entre la configuration de transport de fret 15 et la configuration de transport de passagers 17, afin que la zone de transport 12 soit adaptée pour le transport du fret 14 ou alternativement pour le transport des passagers 16.

Par exemple, l'étape de reconfiguration comprend le regroupement, retrait et/ou intégration dans le plancher et/ou les cloisons des éléments prévus pour le transport de passagers. Ces éléments sont par exemple des assises passagers, des tables et /ou des porte-bagages.

L'étape de reconfiguration est par exemple réalisée au deuxième point 6.

On conçoit ainsi que le véhicule ferroviaire 2 comprend la zone de transport 12 qui est soit dédiée exclusivement au fret 14, soit dédiée exclusivement aux passagers 16. Ainsi, la zone de transport 12 contient le fret 14 ou les passagers 16, en fonction d'un besoin de transport vers l'une ou plusieurs gares parmi la première gare 4, la deuxième gare 6 et la troisième gare 8 dans laquelle le véhicule ferroviaire 2 est situé.

Ainsi, par exemple, lorsqu'une grande quantité de fret 14 est à transporter entre une zone industrielle et une zone urbaine, le véhicule ferroviaire 2 transporte exclusivement le fret 14 dans sa zone de transport 12 à la zone urbaine. Ensuite, le véhicule ferroviaire 2 transporte par exemple uniquement des passagers 16 dans la zone de transport 12 à partir de la zone urbaine à une zone de villégiature.

## Revendications

1. Procédé de transport (1) de passagers (16) et de fret (14), le procédé comprenant :
- une étape de transport de fret (130), dans laquelle un véhicule ferroviaire (2), comprenant une pluralité de voitures (10), est dans une configuration de transport de fret (15), dans laquelle au moins une voiture (10) de la pluralité de voitures comprend une zone de transport (12) dédiée exclusivement à ce fret (14) pendant l'étape de transport de fret (130), et transporte le fret (14) disposé à l'intérieur de la zone de transport (12) d'un premier point (4) à un deuxième point (6) distant du premier point (4), le véhicule ferroviaire (2) comprenant au moins une seconde zone de transport (13) distincte de la zone de transport (12), la seconde zone de transport (13) étant, dans la configuration de transport de fret (15), dédiée à la réception de passagers pour le transport de passagers (16) au sein de cette zone (13) du premier point (4) au deuxième point (6),
la zone de transport (12) étant agencée dans la même voiture (10) que la seconde zone de transport (13) ; et
- une étape de transport de passagers (150), dans laquelle le véhicule ferroviaire (2) est dans une configuration de transport de passagers (17), dans laquelle le véhicule ferroviaire (2) transporte exclusivement les passagers (16) disposés à l'intérieur de ladite zone de transport (12) du deuxième point (6) à un troisième point (8) distant du deuxième point (6),

2. Procédé de transport selon la revendication 1, dans lequel la seconde zone de transport (13) est, dans la configuration de transport de passagers (17), dédiée à la réception du fret (14) pour le transport du fret (14) au sein de cette zone du deuxième point (6) au troisième point (8).

3. Procédé de transport selon la revendication 2 ou 3, dans lequel la zone de transport (12) est agencée dans une première voiture (10) et la seconde zone de transport (13) est agencée dans une deuxième voiture (10) distincte de la première voiture (10).

4. Procédé de transport selon l'une quelconque des revendications précédentes, dans lequel chaque voiture (10) de la pluralité de voitures comprend une caisse (7) définissant un espace intérieur dans lequel est agencé la zone de transport (12), la caisse (7) étant, lors de l'étape de transport de passagers (150), identique par rapport à ladite caisse (7) lors de l'étape de transport de fret (130).

5. Procédé de transport selon l'une quelconque des revendications précédentes, dans lequel l'étape de transport de fret (130) comprend :
- une sous-étape de chargement (160) du fret (14) dans la zone de transport (12) dépourvue de passagers ;
- une sous-étape de déplacement (162) du véhicule ferroviaire (2) du premier point (4) au deuxième point (6) ; et
- une sous-étape de déchargement (164) du fret (14) du véhicule ferroviaire (2) mise en oeuvre par un robot autonome (20).

6. Procédé de transport selon l'une quelconque des revendications précédentes, le procédé comprenant une étape de transport urbain (140) lors de laquelle le fret (14) est transporté, à partir du troisième point (8), par un moyen de transport urbain (32), tel qu'un tramway, un bus, ou une navette autonome, vers une destination finale du fret (14).

7. Procédé de transport selon l'une quelconque des revendications précédentes, comprenant une étape de reconfiguration de la zone de transport (12) d'une configuration de transport de fret (15) à une configuration de transport de passagers (17).

8. Réseau de transport (1) comprenant au moins un véhicule ferroviaire (2), le véhicule ferroviaire comprenant une pluralité de voitures (10), et étant apte à être mis dans une configuration de transport de fret (15), pendant une étape de transport de fret (130) dans laquelle au moins une voiture (10) de la pluralité de voitures comprend une zone de transport (12) dédiée exclusivement à ce fret (14), pendant une étape de transport de fret (130), et transporte le fret (14) disposé à l'intérieur de la zone de transport (12), d'un premier point (4) à un deuxième point (6) distant du premier point (4), le véhicule ferroviaire (2) comprenant au moins une seconde zone de transport (13) distincte de la zone de transport (12), la seconde zone de transport (13) étant, dans la configuration de transport de fret (15), dédiée à la réception de passagers pour le transport de passagers (16) au sein de cette zone (13) du premier point (4) au deuxième point (6), la zone de transport (12) étant agencée dans la même voiture (10) que la seconde zone de transport (13), et le véhicule étant configuré pour être, pendant une étape de transports de passagers (150), dans une configuration de transport de passagers (17), dans laquelle le véhicule ferroviaire (2) transporte exclusivement des passagers (16) disposés à l'intérieur de ladite zone de transport (12) du deuxième point (6) à un troisième point (8) distant du deuxième point (6), le véhicule ferroviaire (12) étant en outre configuré pour mettre en oeuvre un procédé de transport selon l'une quelconque des revendications précédentes.

## Patentansprüche

1. Verfahren zum Transport (1) von Passagieren (16) und Fracht (14), wobei das Verfahren umfasst:
- einen Frachttransportschritt (130), bei dem ein Schienenfahrzeug (2), das eine Vielzahl von Wagen (10) umfasst, in einer Frachttransportkonfiguration (15) ist, wobei mindestens ein Wagen (10) der Vielzahl von Wagen einen Transportbereich (12) aufweist, der während des Frachttransportschrittes (130) ausschließlich für diese Fracht (14) bestimmt ist, und die Fracht (14), die innerhalb des Transportbereichs (12) angeordnet ist, von einem ersten Punkt (4) zu einem zweiten Punkt (6) transportiert, der von dem ersten Punkt (4) entfernt ist, wobei das Schienenfahrzeug (2) mindestens einen zweiten Transportbereich (13) umfasst, der von dem Transportbereich (12) getrennt ist, wobei der zweite Transportbereich (13) in der Frachttransportkonfiguration (15) der Aufnahme von Passagieren für den Transport von Passagieren (16) innerhalb dieses Bereichs (13) vom ersten Punkt (4) zum zweiten Punkt (6) gewidmet ist,
wobei der Transportbereich (12) in demselben Wagen (10) wie der zweite Transportbereich (13) angeordnet ist; und
- einen Fahrgasttransportschritt (150), bei dem sich das Schienenfahrzeug (2) in einer Fahrgasttransportkonfiguration (17) befindet, in der das Schienenfahrzeug (2) ausschließlich die innerhalb des Transportbereichs (12) befindlichen Fahrgäste (16) vom zweiten Punkt (6) zu einem dritten Punkt (8), der vom zweiten Punkt (6) entfernt ist, befördert.

2. Transportverfahren nach Anspruch 1, wobei der zweite Transportbereich (13) in der Konfiguration des Passagiertransports (17) der Aufnahme von Fracht (14) gewidmet ist, um die Fracht (14) innerhalb dieses Bereichs vom zweiten Punkt (6) zum dritten Punkt (8) zu transportieren.

3. Transportverfahren nach Anspruch 2 oder 3, wobei der Transportbereich (12) in einem ersten Wagen (10) angeordnet ist und der zweite Transportbereich (13) in einem zweiten Wagen (10) angeordnet ist, der vom ersten Wagen (10) getrennt ist.

4. Transportverfahren nach einem der vorhergehenden Ansprüche, wobei jedes Fahrzeug (10) aus der Vielzahl von Fahrzeugen einen Wagenkasten (7) umfasst, der einen Innenraum definiert, in dem sich der Transportbereich (12) befindet, wobei der Wagenkasten (7) im Schritt des Transports von Passagieren (150) mit dem Wagenkasten (7) im Schritt des Transports von Fracht (130) identisch ist.

5. Transportverfahren nach einem der vorhergehenden Ansprüche, wobei der Schritt des Transports von Fracht (130) umfasst:
- einen Teilschritt des Verladens (160) der Fracht (14) in den Transportbereich (12), der frei von Passagieren ist;
- einen Teilschritt des Bewegens (162) des Schienenfahrzeugs (2) vom ersten Punkt (4) zum zweiten Punkt (6); und
- einen Teilschritt des Entladens (164) der Fracht (14) vom Schienenfahrzeug (2), der von einem autonomen Roboter (20) durchgeführt wird.

6. Transportverfahren nach einem der vorhergehenden Ansprüche, wobei das Verfahren einen Stadttransportschritt (140) umfasst, bei dem die Fracht (14) vom dritten Punkt (8) aus durch ein Stadttransportmittel (32), wie eine Straßenbahn, einen Bus oder einen autonomen Shuttle, zu einem Endziel der Fracht (14) transportiert wird.

7. Transportverfahren nach einem der vorhergehenden Ansprüche, das einen Schritt zur Neukonfiguration des Transportbereichs (12) von einer Frachttransportkonfiguration (15) zu einer Passagiertransportkonfiguration (17) umfasst.

8. Transportnetz (1), das mindestens ein Schienenfahrzeug (2) umfasst, wobei das Schienenfahrzeug eine Vielzahl von Wagen (10) umfasst, die während eines Frachttransportschrittes (130), in eine Frachttransportkonfiguration (15) gebracht werden kann, in der mindestens ein Fahrzeug (10) der Vielzahl von Fahrzeugen einen Transportbereich (12) umfasst, der während eines Frachttransportschrittes (130) ausschließlich dieser Fracht (14) gewidmet ist und die Fracht (14), die in dem Transportbereich (12) angeordnet ist, von einem ersten Punkt (4) zu einem zweiten Punkt (6) transportiert, der von dem ersten Punkt (4) entfernt ist, wobei das Eisenbahnfahrzeug (2) mindestens einen zweiten Transportbereich (13) umfasst, der von dem Transportbereich (12) getrennt ist, wobei der zweite Transportbereich (13) in der Frachttransportkonfiguration (15) zur Aufnahme von Passagieren für den Transport von Passagieren (16) innerhalb dieses Bereichs (13) vom ersten Punkt (4) zum zweiten Punkt (6) bestimmt ist, wobei der Transportbereich (12) im selben Fahrzeug (10) angeordnet ist wie der zweite Transportbereich (13), und das Fahrzeug so konfiguriert ist, dass es sich während eines Passagiertransportschritts (150) in einer Passagiertransportkonfiguration (17) befindet, in der das Schienenfahrzeug (2) ausschließlich Passagiere (16) befördert, die sich innerhalb des Transportbereichs (12) vom zweiten Punkt (6) zu einem dritten Punkt (8) befinden, der vom zweiten Punkt (6) entfernt ist, wobei das Schienenfahrzeug (12) ferner so konfiguriert ist, dass es ein Transportverfahren nach einem der vorhergehenden Ansprüche durchführt.

## Claims

1. A method of transporting (1) passengers (16) and freight (14), the method comprising:
- a freight transport step (130), in which a rail vehicle (2), comprising a plurality of carriages (10), is in a freight transport configuration (15), wherein at least one carriage (10) of the plurality of carriages comprises a transport area (12) dedicated exclusively to that freight (14) during the freight transport step (130), and transports the freight (14) arranged within the transport area (12) from a first point (4) to a second point (6) distant from the first point (4), the rail vehicle (2) comprising at least one second transport area (13) distinct from the transport area (12), the second transport area (13) being, in the freight transport configuration (15), dedicated to receiving passengers for transporting passengers (16) within this area (13) from the first point (4) to the second point (6),
the transport area (12) being arranged in the same car (10) as the second transport area (13); and
- a passenger transport stage (150), in which the rail vehicle (2) is in a passenger transport configuration (17), in which the rail vehicle (2) exclusively transports the passengers (16) disposed inside said transport zone (12) from the second point (6) to a third point (8) distant from the second point (6),

2. Transport method according to claim 1, in which the second transport zone (13) is, in the passenger transport configuration (17), dedicated to receiving freight (14) for transporting the freight (14) within this zone from the second point (6) to the third point (8).

3. A transport method according to claim 2 or 3, in which the transport zone (12) is arranged in a first carriage (10) and the second transport zone (13) is arranged in a second carriage (10) separate from the first carriage (10).

4. A transport method according to any one of the preceding claims, in which each car (10) of the plurality of cars comprises a body (7) defining an interior space in which the transport zone (12) is arranged, the body (7) being, during the step of transporting passengers (150), identical with respect to said body (7) during the step of transporting freight (130).

5. A transport method according to any one of the preceding claims, wherein the freight transport step (130) comprises:
- a sub-step (160) for loading the freight (14) into the passenger-free transport zone (12);
- a sub-step of moving (162) the rail vehicle (2) from the first point (4) to the second point (6); and
- a sub-step (164) for unloading freight (14) from the rail vehicle (2), done by an autonomous robot (20).

6. A transport method according to any one of the preceding claims, the method comprising an urban transport step (140) during which the freight (14) is transported, from the third point (8), by an urban transport means (32), such as a tramway, a bus, or an autonomous shuttle, to a final destination of the freight (14).

7. A transport method according to any of the preceding claims, comprising a step of reconfiguring the transport zone (12) from a freight transport configuration (15) to a passenger transport configuration (17).

8. A transport network (1) comprising at least one rail vehicle (2), the rail vehicle comprising a plurality of carriages (10), and being able to be put into a freight transport configuration (15), during a freight transport stage (130) in which at least one carriage (10) of the plurality of carriages comprises a transport area (12) dedicated exclusively to that freight (14), during a freight transport step (130), and transports the freight (14) arranged inside the transport area (12), from a first point (4) to a second point (6) distant from the first point (4), the rail vehicle (2) comprising at least one second transport area (13) distinct from the transport area (12), the second transport area (13) being, in the freight transport configuration (15), dedicated to receiving passengers for transporting passengers (16) within this area (13) from the first point (4) to the second point (6), the transport area (12) being arranged in the same carriage (10) as the second transport area (13), and the vehicle being configured to be, during a passenger transport stage (150), in a passenger transport configuration (17), in which the rail vehicle (2) exclusively transports passengers (16) disposed inside said transport zone (12) from the second point (6) to a third point (8) distant from the second point (6), the rail vehicle (12) being further configured to implement a transport method according to any one of the preceding claims.
